# EUROPEAN PATENT SPECIFICATION

(11) **EP 3 947 102 B1**
(45) Date of publication and mention of the grant of the patent: **30.07.2025**
(21) Application number: 20785343.3
(22) Date of filing: 27.03.2020
(51) Int. Cl.: B61L 27/70, H04B 3/54, B61L 19/06

(54) **SYSTEM FOR SETTING UP COMMUNICATION BETWEEN A SIGNAL EQUIPMENT ROOM (SER) AND WAYSIDE DEVICES**
SYSTEM ZUR ERRICHTUNG VON KOMMUNIKATION ZWISCHEN EINEM SIGNALAUSRÜSTUNGSRAUM (SER) UND STRECKENSEITIGEN VORRICHTUNGEN
SYSTÈME D'ÉTABLISSEMENT D'UNE COMMUNICATION ENTRE UN LOCAL TECHNIQUE DE SIGNALISATION (SER) ET DES DISPOSITIFS EN BORDURE DE VOIE

(30) Priority: 29.03.2019 IN 201941012498
(43) Date of publication of application: 09.02.2022
(73) Proprietor: L & T Technology Services Limited, Chennai 600089 (IN)
(72) Inventor: NAROTTAM KEER, Niranjan, Mumbai 400709 (IN); C MANIANGATTU, Jose, Bengaluru 560045 (IN); SIVARAJ, Prakash, Trichy 620021 (IN); PRASAD MUKHERJEE, Aradhya, City Bokaro 827006 (IN); ANIRUDHSINH SODHA, Abhijeetsinh, Jamnagar 361002 (IN); KESHAVA SANKAMAR, Divya, Mangaluru 575029 (IN); SHUBHAM, Kumar, Madhubani 847212 (IN); DILKUSH, Safa, Udupi 576101 (IN); SHAILESHBHAI HADIYA, Yash, Surat 395010 (IN)
(74) Representative: Studio Torta S.p.A.
(86) International application number: PCT/IB2020/052897
(87) International publication number: WO 2020/201949

(56) References cited:
- EP-B1- 2 139 745
- EP-B1- 2 347 943
- DE-U1- 202004 006 693
- JP-A- 2003 237 579
- US-B2- 6 556 898

## Description

### Technical Field

This disclosure relates generally to setting up communication, and more particularly to a system for setting up communication between a Signal Equipment Room (SER) and wayside devices.

### Background

In railways industry, signalling system is one of the most critical system, as it is directly connected to the safety of the passengers and rail operators, both on-board and on-ground. A Signal Equipment Room (SER) may control a number of wayside devices in a station field area of a railway station using command signals. These wayside devices may include signal posts and point machines.

A typical station field area may include six signal posts and roughly eight-point machines. Each wayside device is hard wired using armored multi-core cable (for example, a 24-core cable or a 30-core cable) to the relay logic implemented in the SER. An average distance between the wayside device and the SER is approximately 500 meters. As such, the cost of laying these cables to setup communication between the SER and the wayside devices is high, as these armored multi-core cables are cost high. Moreover, large manual efforts are required to lay and maintain these cables.

Hence, there is a need to minimize the cost of the cables between the SER and wayside devices, and further reduce manual intervention required in laying and maintaining these cables.

### SUMMARY

In one embodiment, a system for setting up communication between a Signal Equipment Room (SER) and wayside devices is disclosed. The system includes a master controller configured to receive a first analog command signal from the SER over a first power line. This master controller is configured to generate a digital command signal based on the first analog command signal. The system further includes a plurality of slave controllers configured to receive the digital command signal from the master controller over a second power line. Each of the plurality of slave controllers is configured to generate a second analog command signal based on the digital command signal. Further, each of the plurality of slave controllers is configured to send the second analog command signal to a corresponding wayside device over a respective third power line. The second power line power line may include a lower core power cable than the first and the third power line.

It is to be understood that both the foregoing general description and the following detailed description are exemplary and explanatory only and are not restrictive of the invention, which is defined by the appended claims. Document JP2003 237579 describes an intelligent terminal for a railway signal security device that is incorporated in or attached to a field device of the railway signal security device and performs electronic control thereof.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an environment 100 for setting up communication between a Signal Equipment Room (SER) and wayside devices is illustrated, in accordance with an embodiment of the present disclosure.
**FIG. 2A** is a block diagram of a master controller for setting up communication between a Signal Equipment Room (SER) and wayside devices, in accordance with an embodiment of the present disclosure.
**FIG. 2B** is a functional block diagram of a memory of a master controller, in accordance with an embodiment of the present disclosure.
**FIG. 3A** is a block diagram of a slave controller for setting up communication between a Signal Equipment Room (SER) and wayside devices, in accordance with an embodiment of the present disclosure.
**FIG. 3B** is a functional block diagram of a memory of slave controller, in accordance with an embodiment of the present disclosure.
**FIG. 4A** is a functional block diagram of a master controller, in accordance with another embodiment of the present disclosure.
**FIG. 4B** is a functional block diagram of a slave controller, in accordance with another embodiment of the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the invention as defined by the claims. It is intended that the following detailed description be considered as exemplary only.

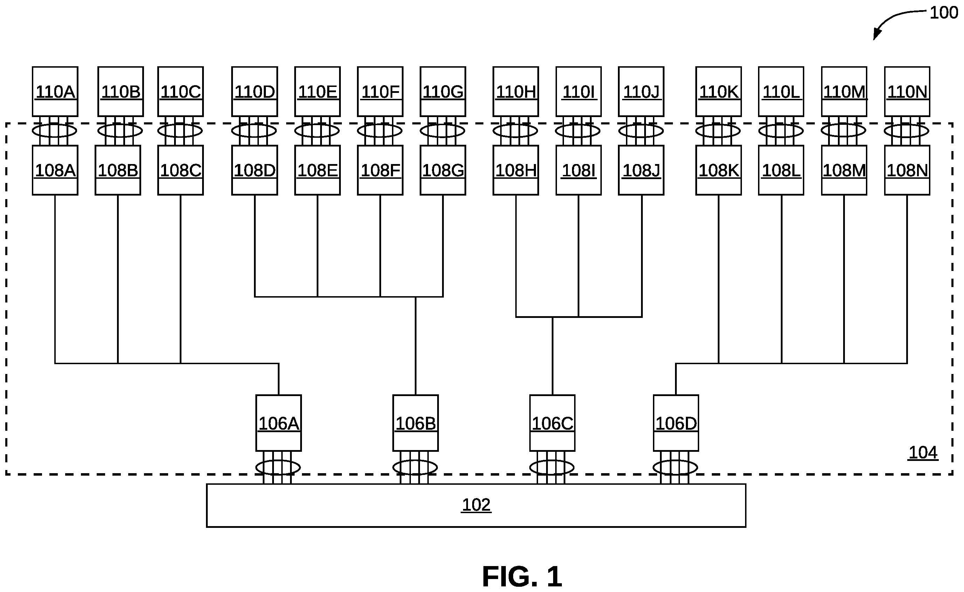

Referring now to FIG. 1, a block diagram of an environment 100 for setting up communication between a Signal Equipment Room (SER) and wayside devices is illustrated, in accordance with an embodiment. The environment 100 includes a SER 102 and a plurality of wayside devices 110A, 110B, ...110N (also, collectively referred to as plurality of wayside devices 110).

As it will be appreciated by those skilled in the art, the SER 102 performs signaling control through a decentralized network of control points. These control points are implemented in the form of wayside devices. Further, these wayside devices may include signal posts or point machines. As such, the SER 102 may control train movements through railway signals, so as to ensure smooth running of railway operations, for example, by regulating safety, routes, and schedule. For example, the SER 102 may control train movements by transmitting command signals to the wayside devices 110. Further, the SER 102 may provide for safe and reliable operations and maintenance of critical systems, such as signaling communication system and electrical distribution.

As mentioned above, each of the plurality of wayside devices 110 may be either a signal post or a point machine. It may be understood that signal post may be a visual display device that conveys instructions or provides advance warning of instructions regarding train driver's authority to proceed. The train driver interprets the signal's and acts accordingly. Further, the signal may inform the train driver of the speed at which the train may safely proceed, or the signal may even instruct the driver to stop. The point machine may be a device for operating railway turnouts. The point machine may also be known as a point motor, switch machine, or a switch motor.

The environment 100 implements a system 104 for setting up communication between the SER 102 and the plurality of wayside devices 110. It may be noted that the system 104 may be implemented on a railway site, for example, a railway station. According to the invention, the system 104 includes one or more master controllers 106 which are configured to receive a first analog command signal from the SER over a first power line. Each of the one or more master controllers 106 is further configured to generate a digital command signal based on the first analog command signal. Further, the system 104 includes a plurality of slave controllers 108 which are configured to receive the digital command signal from a corresponding master controller 106 over a second power line. Each of the plurality of slave controllers 108 is configured to generate a second analog command signal based on the digital command signal, and send the second analog command signal to a corresponding wayside device of the plurality of wayside devices 110 over a third power line. The second power line is a lower core power cable than the first and the third power line.

It may be further noted that the one or more master controllers 106 may be positioned in proximity to the SER 102. Further, the plurality of slave controllers 108 may be positioned in proximity to the corresponding wayside devices 110.

By way of an example, as shown in FIG. 1, the environment 100 may include the SER 102, the plurality of wayside devices 110, and the system 104 for setting up communication between the SER 102 and the plurality of wayside devices 110. The system 104 includes one or more master controllers 106A, 106B, ... 106D (also, collectively and individually referred to as one or more master controllers 106 and master controller 106). The one or more master controllers 106 are communicatively coupled to the SER 102 over the first power line. Each of the one or more master controllers 106 is configured to receive a first analog command signal from the SER 102 over the first power line. In some embodiments, the first power line may include one of a 24-core power cable or a 30-core power cable.

The system 104 further includes a plurality of slave controllers 108A, 108B...108N (also, collectively and individually referred to as plurality of slave controllers 108 and slave controller 108). Each of these plurality of slave controllers 108 is communicatively coupled to a corresponding master controller 106. Each of the plurality of slave controllers 108 receives the digital command signal from the master controller 106 over the second power line. The second power line includes a lower core power cable than the first power line. For example, the second power line may include a 4-core power cable. In some embodiments, the second power line may include two redundant power cables, for redundant 2x2-core power line.

It may be noted that the each of the plurality of slave controllers 108 generates a second analog command signal based on the digital command signal. Further, each of the plurality of slave controllers 108 sends the second analog command signal to a corresponding wayside device of the plurality of wayside devices 110. To this end, each of the plurality of slave controllers 108 is communicatively coupled to a corresponding wayside device from a plurality of wayside devices 110 over a third power line. The third power line includes a higher core power cable than the second power line. For example, the third power line may include one of a 24-core power cable and a 30-core power cable.

In particular, as shown in FIG. 1, a first set of slave controllers including slave controllers 108A, 108B, and 108C may be communicatively coupled to the first master controller 106A. Similarly, a second set of slave controllers including slave controllers 108D, 108E, 108F, and 108G may be communicatively coupled to the second master controller 106B. A third set of slave controllers including slave controllers 108H, 108I, 108J, and 108K may be communicatively coupled to the third master controller 106C. A fourth set of slave controllers including slave controllers 108L, 108M, and 108N may be communicatively coupled to the fourth master controller 106D.

Further, the slave controller 108A may be communicatively coupled to a wayside device 110A, the slave controller 108B may be communicatively coupled to a wayside device 110B, and the slave controller 108C may be communicatively coupled to a wayside device 110C. Further, the slave controller 108D may be communicatively coupled to a wayside device 110D, the slave controller 108E may be communicatively coupled to a wayside device 110E, the slave controller 108F may be communicatively coupled to a wayside device 110F, and the slave controller 108G may be communicatively coupled to a wayside device 110G. Further, the slave controller 108H may be communicatively coupled to a wayside device 110H, the slave controller 108I may be communicatively coupled to a wayside device 110I, and the slave controller 108J may be communicatively coupled to a wayside device 110J. Further, the slave controller 108K may be communicatively coupled to a wayside device 110K, the slave controller 108L may be communicatively coupled to a wayside device 110L, the slave controller 108M may be communicatively coupled to a wayside device 110M, and the slave controller 108N may be communicatively coupled to a wayside device 108N.

By way of an example, the wayside devices 110A, 110B, 110C, 110D, 110E, 110F, and 110G may be signal posts, and these wayside devices (i.e. signal posts) may be communicatively coupled to the corresponding slave controller via 24-core power cables. Further, the wayside devices 110H, 110I, 110J, 110K, 110L, 110M, and 110N may be point machines and may be communicatively coupled to the corresponding slave controller via 30-core power cables.

In some embodiments, each master controller 106 may receive, from the SER 102, a first analog command signal over a first power line for controlling a wayside device from a plurality of wayside devices 110. Further, each master controller 106 may generate a digital command signal based on the first analog command signal, and transmit the digital command signal to each of the plurality of slave controllers 108 over a second power line. As mentioned above, each of the plurality of slave controllers 108 may generate a second analog command signal based on the digital command signal, and send the second analog command signal to a corresponding wayside device 110 over the third power line.

In some embodiments, the master controller 106 may digitize the analog command signals received from the SER 102 and package them in multiple digital messages. The master controller 106 may then transmit the packaged digital command signals to the corresponding slave controllers 108 over the second power line, using appropriate modulation. It may be noted that the digital command signal transmitted by the master controller 106 may include multiple digital command signals. Further, each of these multiple digital command signals may correspond to each slave controller of the first plurality of slave controllers 108.

In some embodiments, each of the plurality of slave controllers 108 may have a unique slave controller ID assigned to it. Upon receiving the multiple digital command signals from the master controller 106, each slave controller 108 may map the unique ID assigned to it with the ID associated with each of the multiple digital command signals. Based on the mapping, each slave controller 108 may identify a digital command signal corresponding to that slave controller.

Once the slave controller 108 has identified the corresponding digital command signal, the slave controller 108 may decode that digital command signal. Upon decoding, the slave controller 108 may trigger a control action for controlling a corresponding wayside device 110 (i.e. control output ports), based on the decoded digital command signal. For example, the control action may include generating a signal on the signal post, or causing to align the railway track with one of two or more connecting tracks.

In some embodiments, the master controller 106 may validate integrity of received analog signal. To this end, the master controller 106 may embed a cyclic redundancy check (CRC) and/or a life counter in the digital command signal. Further, in some embodiments, the master controller 106 may transmit the digital command signal at a predefined interval to ensure that required safety is achieved. Further, each slave controller 108 may validate the received message against the received CRC and state of the life counter value of the message. Further, the slave controller 108 may act on the decoded message to accordingly control the wayside device.

In some embodiments, the slave controller 108 may receive a feedback signal from the corresponding wayside device in the form of load current or limit switches. The slave controller 108 may further digitize the feedback signal and transmit the feedback signal to the master controller 106 as a response message. The response message may include the slave controller ID, feedback values, CRC and life counter information. Further, the slave controller 108 may transmit the response message on dual power lines. Based on the response received, the master controller 106 may control feedback lines connected to the SER.

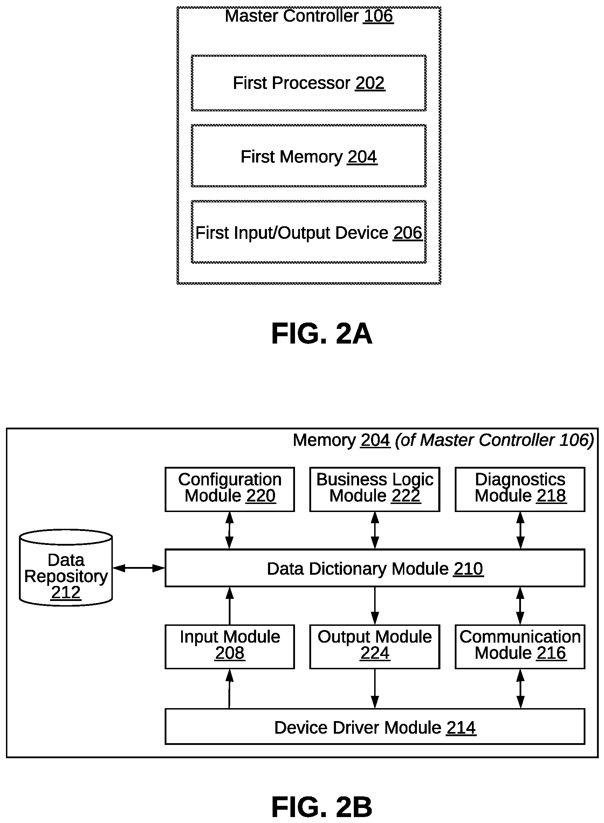

Referring now to FIG. 2A, a block diagram of a master controller 106 is illustrated, in accordance with an embodiment of the present disclosure. As shown in FIG. 2A, in some embodiments, the master controller 106 may include one or more first processors 202, a first memory (computer-readable medium) 204, and first input/output devices 206. The first memory 204 may store instructions that, when executed by the one or more first processors 202, cause the one or more first processors 202 to receive, from the SER, an analog command signal for controlling the second plurality of wayside devices, generate a digital command signal corresponding to the analog command signal, and cause to transmit the digital command signal to a slave controller from the first plurality of slave controllers to control an associated wayside device from the second plurality of wayside devices. The first memory 204 may also store various data that may be captured, processed, and/or required by the master controller 106. In some embodiments, the master controller 106 may interact with a user via the first input/output devices 206.

Referring now to Fig. 2B, a functional block diagram of the first memory 204 of the master controller 106 is illustrated, in accordance with an embodiment of the present disclosure. The first memory 204 may include an input module 208, a data dictionary module 210, a data repository 212, a device driver module 214, a communication module 216, a diagnostics module 218, a configuration module 220, a business logic module 222, and an output module 224.

In some embodiments, the input module 208 of the master controller 106 may receive analog command signals from SER 102. The input module 208 may further digitize the analog command signals and update corresponding one or more variables in the data dictionary module 210. By way of an example, the one or more variables may include a green light command, a dual yellow command, a feedback for dual yellow, and a feedback for green light. The input module 208 may further receive feedback signal from the slave controller 108, and update corresponding variables in the data dictionary module 210. In some embodiments, the data dictionary module 210 of the master controller 106 may be coupled to the data repository 212 where the data dictionary module 210 may maintain and validate the one or more variables required for functioning of the system 104. In some embodiments, the data dictionary module 210 may store and maintain block CRC and life timer for data structure of the one or more variables.

The device driver module 214 of the master controller 106 may encapsulate functions to communicate with hardware and provide data to other modules. The communication module 216 of the master controller 106 may periodically receive data from the data dictionary module 210. The communication module 216 may further create packets with a device ID, CRC and life counter, and send to a physical layer. The communication module 216 may further periodically check received data, validate CRC, decode message, and update corresponding variables in the data dictionary module 210. The diagnostics module 218 of the master controller 106 may monitor life counter of data packets to check if communication is lost. The diagnostics module 218, on detecting any fault that hinders safety of the overall system, may overwrite output variables in the data dictionary module 210.

The configuration module 220 of the master controller 106 may load system configuration of the master controller 106, for example, during power up. The business logic module 222 of the master controller 106 may include logic to operate the system 104. The output module 224 may provide outputs as per the variables updated by the business logic module 222 and diagnostics module 218, in the data dictionary module 210.

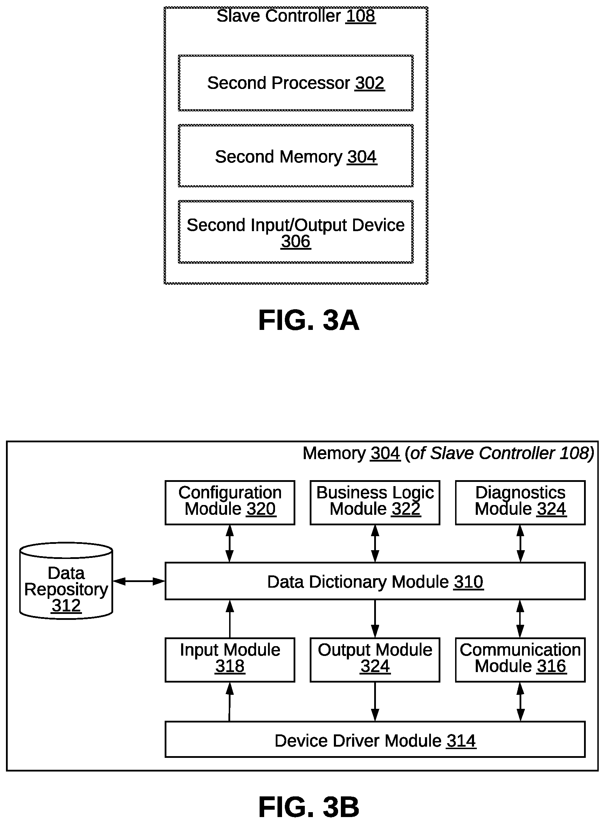

Referring now to FIG. 3A, a block diagram of the slave controller 108 is illustrated, in accordance with an embodiment of the present disclosure. As shown in FIG. 3A, in some embodiments, the slave controller 108 may include one or more second processors 302, a second memory (computer-readable medium) 304, and second input/output devices 306. The second memory 304 may store instructions that, when executed by the one or more second processors 302, cause the one or more second processors 302 to receive the digital command signal from the master controller, decode the digital command signal, and trigger a control action for controlling the associated wayside device based on the decoded digital command signal. The second memory 304 may also store various data that may be captured, processed, and/or required by the slave controller 108. In some embodiments, the slave controller 108 may interact with a user via the second input/output devices 306.

Referring now to Fig. 3B, a functional block diagram of the second memory 304 of the slave controller 108 is illustrated, in accordance with an embodiment of the present disclosure. The second memory 304 may include an input module 308, a data dictionary module 310, a data repository 312, a device driver module 314, a communication module 316, a diagnostics module 318, a configuration module 320, a business logic module 322, and an output module 324.

The input module 308 may receive feedback signals from the corresponding wayside device 110. The data dictionary module 310 may communicate with the data repository 312 to maintain and validate the one or more variables required for functioning of the system. In some embodiments, the data dictionary module 310 may maintain CRC and life counter for data structure of the variables. The device driver module 314 may encapsulate functions to communicate with hardware and provide data to other modules. The communication module 316 may periodically check received data, validate CRC, decode digital command signal, and update corresponding data dictionary variables. Further, the communication module 316, in response to received command message from the master controller 106, may pick data from the data dictionary module 310, and create data packets using the slave controller unique ID, feedback information, CRC and life counter information. The communication module 316 may further send these data packets to the physical layer.

The diagnostics module 318 may monitor life counter of data packets to check if communication is lost. Upon detecting any fault, the diagnostics module 318 may overwrite output variables in the data dictionary module 310. The configuration module 320 may load system configuration of the slave controller 108 at power up. The business logic module 322 may include logic to operate the system. The output module 324 may provide outputs as per the variables updated by the business logic module 322 and diagnostics module 318, in the data dictionary module 310.

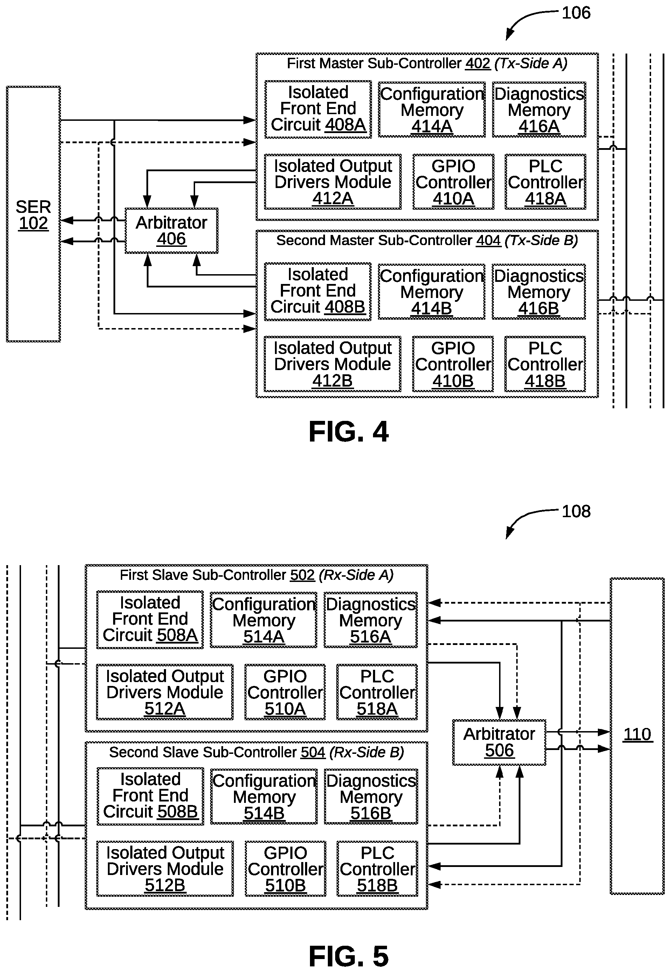

In some embodiments, the master controller 106 and the slave controller 108 may implement a fail-safe mechanism, as explained in detail in conjunction with FIG. 4-5.

Referring now to FIG. 4, a block diagram of the master controller 106 is illustrated, in accordance with another embodiment of the present disclosure. In some embodiments, the master controller 106 may include dual master sub-controllers, i.e. a first master sub-controller 402 and a second master sub-controller 404. It may be noted that the first master sub-controller 402 and the second master sub-controller 404 may operate independently of each other. Further, in some embodiment, the master controller 106 may include an arbitrator 406. The first master sub-controller 402 and the second master sub-controller 404 may have the same hardware components, and together they may provide redundancy and increases availability.

The arbitrator 406 may decide which of the first master sub-controller 402 and the second master sub-controller 404 may drive output. For example, condition of each of the first master sub-controller 402 and the second master sub-controller 404 may be monitored. Based on the monitored condition, the arbitrator 406 may cause one of the first master sub-controller 402 and the second master sub-controller 404 to perform one or more operations. These one or more operations may include receiving the digital command signal from the master controller over the second power line, generating the second analog command signal based on the digital command signal, and sending the second analog command signal to the corresponding wayside device over the third power line. In other words, one of the first master sub-controller 402 and the second master sub-controller 404 may be selected to perform the above one or more operations, based on their conditions. The arbitrator 406 may decide which among the two master sub-controllers may drive the final output, based on the health of each master sub-controller. These outputs may be finally fed to the SER logic. In case both the master sub-controllers fail to operate, the arbitrator 406 may fall back to a fail-safe state. This will trigger the SER logic to take the necessary action to keep the overall signaling system safe.

For example, analog command signals of 24V DC or 110V AC may be fed to from the SER 102 the master controller 106. These analog command signals may be received by front end circuits 408A, 408B of the first master sub-controller 402 and the second master sub-controller 404, respectively. Thereafter, the first master sub-controller 402 and the second master sub-controller 404 may digitize these analog command signals, and then package them in multiple digital messages addressed to corresponding wayside devices. The first master sub-controller 402 and the second master sub-controller 404 may then transmit the multiple digital messages over two power lines (belonging to the second power line) using appropriate modulation. Both the first master sub-controller 402 and the second master sub-controller 404 may transmit these multiple digital messages independently to the plurality of slave controllers 108.

The first master sub-controller 402 may include an isolated front-end circuit 408A, a general-purpose input/output (GPIO) controller 410A, an isolated output drivers module 412A, a configuration memory 414A, a diagnostics memory 416A, and a PLC controller 418A.

For example, the isolated front-end circuit 408A may convert the analog signals into low level signals compatible with the GPIO controller 410A, and may provide optical isolation and noise filtering. The GPIO controller 410A may translate the analog commands into digital messages and vice-versa. The isolated output drivers module 412A may translate the GPIO controller level signals to the SER level analog commands while maintaining optical isolation between the two systems. The configuration memory 414A may be a non-volatile memory, and may hold the communication baud rate and device ID. The diagnostics memory 416A may log in diagnostic messages. It may be noted that an application may perform background scans to monitor the communication quality and may log diagnostics messages in the diagnostics memory 416A, which may be retrieved by maintenance engineers, if required. The PLC controller 418A may modulate/demodulate the digital messages from/to the GPIO controller 410A over the power line using power line carrier communication technique. The arbitrator 406, which may be a pure hardware component, may be wired to compare the individual output of the GPIO controller 410A and decide the final output of the SER.

It may be noted that the second master sub-controller 404 may also include various components corresponding to the first master sub-controller 402. These various components may include an isolated front-end circuit 408B, a GPIO controller 410B, an isolated output driver module 412B, a configuration memory 414B, a diagnostics memory 416B, and a PLC controller 418B. The functionality of these is already explained above.

It may be noted that, in response to receiving the multiple digital messages, the slave controllers 108 may send feedback signal associated with the corresponding wayside device, on two power lines. The feedback signal may be independently received by the first master sub-controller 402 and the second master sub-controller 404 of the master controller 106.

In some embodiments, the number of master controllers 106 required to be implemented in the system 104 may be calculated based on the information that can be exchanged between the SER 102 and the wayside devices 110 by either of the master sub-controllers. This is explained by way of an example with respect to wayside device of a 4-aspect signal post. One or more parameters with respect to the system may be obtained. For example, the one or more parameters may be as follows:

| | |
|---|---|
| Power communication data rate | = 4800 bps |
| Number of bits/byte | = 10 |
| Message length | = 5 bytes |
| Number of messages | = 2 |
| Worst case | = 3 retries |
| Response time | = 500 msec |
| Total Processing time | = 20 msec |

From *(1), (2), (3), (4), (5),* Message transmission time = (1/4800)*10 bits/byte x 10 bytes/message x 2 messages x 3 retries = 125 msec From *(6), (7),* and *(8),* Maximum number of 4-Aspect Signal posts that can be handled by one master controller = Floor (500 msec/(125 msec + 20 msec)) = 3

Further, based on the number of signal posts present in the station field area and the above calculate maximum number of (4-Aspect) signal posts that can be handled by one master controller, the required number of master controllers may be determined. Referring now to FIG. 5, a block diagram of a slave controller 108 is illustrated, in accordance with another embodiment of the present disclosure. The slave controller 108 may include a first slave sub-controller 502 and a second slave sub-controller 504 (redundant sub-controllers). Further, in some embodiment, the slave controller 108 may include an arbitrator 506. The arbitrator 506 may control the final outputs, based on the health of each of the first slave sub-controller 502 and the second slave sub-controller 504.

Similar to the master controller 106 as explained above, the arbitrator 506 may decide which of the first slave sub-controller 502 and the second slave sub-controller 504 may drive output of the slave controller 108. For example, condition of each of the first slave sub-controller 502 and the second slave sub-controller 504 may be monitored. Based on the monitored condition, the arbitrator 506 may cause one of the first slave sub-controller 502 and the second slave sub-controller 504 to perform one or more operations. These one or more operations may include receiving a digital command signal from a master controller over a second power line, generating a second analog command signal based on the digital command signal, and sending the second analog command signal to a corresponding wayside device over a third power line. In other words, one of the first slave sub-controller 502 and the second slave sub-controller 504 may be selected to perform the above one or more operations, based on their respective health conditions. To this end, the master controller 106 and the slave controller may be connected via two redundant power lines. For example, the first master sub-controller 402 may connected to the first slave sub-controller 502 via a redundant power line, and similarly the second master sub-controller 404 may be connected to the second slave sub-controller 504 via a redundant power line.

The first slave sub-controller 502 may include various components similar to the first master sub-controller 402. These components may include an isolated front-end circuit 508A, a GPIO controller 510A, an isolated output driver module 512A, a configuration memory 514A, a diagnostics memory 516A, and a PLC controller 518A. Further, the second slave sub-controller 504 may include various components corresponding to the first slave sub-controller 502, and may include an isolated front-end circuit 508B, a GPIO controller 510B, an isolated output driver module 512B, a configuration memory 514B, a diagnostics memory 516B, and a PLC controller 518B. The functionalities of these have already been explained above with respect to the first master sub-controller 402.

It may be noted that by way of incorporating two master sub-controllers (402 and 404) and two slave sub-controllers (502 and 504), and by way of selecting one from each of these two master sub-controllers and two slave sub-controllers to perform the above operations, high availability and reliability of the system 104 is ensured. Moreover, any fatal failure may cause the system 104 to push the SER 102 into a fail-safe state.

The specification has described method and system for setting up communication between a SER and wayside devices. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), read-write memory, volatile memory, nonvolatile memory, hard drives, CD ROMs, DVDs, flash drives, disks, and any other known physical storage media.

As will be appreciated by those skilled in the art, the techniques described in the various embodiments discussed above relate to setting up communication between a SER and wayside devices. The techniques described above provide a convenient solution for substantially replacing the higher core power cables (for example, 24-core or 30-core) connecting the SER to the wayside devices with lower core power cables (for example, 4-core). By way of this, overall cable cost is significantly reduced (as much as by approximately sixty percent in some cases). Further, time and effort required for setting up the communication is reduced. Furthermore, by implementing dual controllers (two master sub-controllers and two slave sub-controllers), high availability and reliability of the overall system is ensured.

It is intended that the disclosure and examples be considered as exemplary only, with the scope of the invention being indicated by the following claims.

## Claims

1. A system (104) for setting up communication between a Signal Equipment Room (SER, 102) and wayside devices (110), the system (104) comprising:
a master controller (106) configured to receive a first analog command signal from the Signal Equipment Room (SER,102) over a first power line, wherein the master controller (106) is configured to generate a digital command signal based on the first analog command signal; and
a plurality of slave controllers (108) configured to receive the digital command signal from the master controller (106) over a second power line, wherein each of the plurality of slave controllers (108) is configured to generate a second analog command signal based on the digital command signal, wherein each of the plurality of slave controllers (108) is further configured to send the second analog command signal to a corresponding wayside device (110) over a respective third power line, and **characterised in that** the second power line comprises a lower core power cable than the first and the third power line.

2. The system (104) as claimed in claim 1, wherein each of the first and the third power line comprises one of a 24-core power cable and a 30-core power cable, and wherein the second power line comprises a 4-core power cable.

3. The system (104) as claimed in claim 1, wherein the master controller (106) is positioned in proximity to the Signal Equipment Room (SER, 102), and wherein each of the plurality of slave controllers (108) is positioned in proximity to the corresponding wayside device (110).

4. The system (104) as claimed in claim 1, wherein the corresponding wayside device (110) comprises one of a signal post and a point machine.

5. The system (104) as claimed in claim 1, wherein the master controller (106) comprises a first master sub-controller (402) and a second master sub-controller (404), wherein the master controller (106) is configured to:
monitor condition of each of the first master sub-controller (402) and the second master sub-controller (404); and
based on the monitored condition, cause one of the first master sub-controller (402) and the second master sub-controller (404) to:
receive, from the Signal Equipment Room (SER, 102), the first analog command signal from the SER (102) over a first power line;
generate the digital command signal based on the first analog command signal; and
transmit the digital command signal to each of the plurality of slave controllers (108) over the second power line.

6. The system (104) as claimed in claim 1, wherein the master controller (106) is configured to:
validate the received first analog command signal;
generate a validated digital command signal corresponding to the validated first analog command signal; and
upon validation, transmit the validated digital command signal to the plurality of slave controllers (108).

7. The system (104) as claimed in claim 1, wherein each of the plurality of slave controllers (108) is configured to:
receive an analog feedback signal from the associated wayside device (110);
generate the digital feedback signal based on the analog feedback signal; and
transmit the digital feedback signal to the master controller (106), wherein the master controller (106) is configured to trigger a feedback action to control one or more feedback lines based on the digital feedback signal.

8. The system (104) as claimed in claim 1, wherein each of the plurality of slave controllers (108) comprises a first slave sub-controller (502) and a second slave sub-controller (504), wherein each of the plurality of slave controllers (108) is configured to:
monitor condition of each of the first slave sub-controller (502) and the second slave sub-controller (504); and
based on the condition, cause one of the first slave sub-controller (502) and the second slave sub-controller (504) to:
receive the digital command signal from the master controller (106) over the second power line;
generate the second analog command signal based on the digital command signal; and
send the second analog command signal to the corresponding wayside device (110) over the third power line.

## Patentansprüche

1. System (104) zum Einrichten einer Kommunikation zwischen einem Signalausrüstungsraum (SER, 102) und streckenseitigen Vorrichtungen (110), wobei das System (104) Folgendes umfasst:
einen Master-Controller (106), der so konfiguriert ist, dass er ein erstes analoges Befehlssignal von dem Signalausrüstungsraum (SER, 102) über eine erste Stromleitung empfängt, wobei der Master-Controller (106) so konfiguriert ist, dass er ein digitales Befehlssignal auf Grundlage des ersten analogen Befehlssignals erzeugt; und
eine Vielzahl von Slave-Controllern (108), die so konfiguriert sind, dass sie das digitale Befehlssignal von dem Master-Controller (106) über eine zweite Stromleitung empfangen, wobei jeder der Vielzahl von Slave-Controllern (108) so konfiguriert ist, dass er ein zweites analoges Befehlssignal auf Grundlage des digitalen Befehlssignals erzeugt, wobei jeder der Vielzahl von Slave-Controllern (108) ferner so konfiguriert ist, dass er das zweite analoge Befehlssignal über eine jeweilige dritte Stromleitung an eine entsprechende streckenseitige Vorrichtung (110) sendet, und **dadurch gekennzeichnet, dass** die zweite Stromleitung ein Stromkabel mit einem kleineren Kern als die erste und die dritte Stromleitung umfasst.

2. System (104) nach Anspruch 1, wobei die erste und die dritte Stromleitung jeweils ein 24-adriges Stromkabel oder ein 30-adriges Stromkabel umfassen, und wobei die zweite Stromleitung ein 4-adriges Stromkabel umfasst.

3. System (104) nach Anspruch 1, wobei der Master-Controller (106) in der Nähe des Signalausrüstungsraums (SER, 102) positioniert ist und wobei jeder der Vielzahl von Slave-Controllern (108) in der Nähe der entsprechenden streckenseitigen Vorrichtung (110) positioniert ist.

4. System (104) nach Anspruch 1, wobei die entsprechende streckenseitige Vorrichtung (110) entweder einen Signalpfosten oder einen Weichenantrieb umfasst.

5. System (104) nach Anspruch 1, wobei der Master-Controller (106) einen ersten Master-Sub-Controller (402) und einen zweiten Master-Sub-Controller (404) umfasst, wobei der Master-Controller (106) zu Folgendem konfiguriert ist:
Überwachen des Zustands sowohl des ersten Master-Sub-Controller (402) als auch des zweiten Master-Sub-Controllers (404); und
auf Grundlage des überwachten Zustands, Veranlassen, dass entweder der erste Master-Sub-Controller (402) oder der zweite Master-Sub-Controller (404):
von dem Signalausrüstungsraum (SER, 102), den ersten analogen Befehlssignal von dem SER (102) über eine erste Stromleitung empfängt;
den digitalen Befehlssignal auf Grundlage des ersten analogen Befehlssignals erzeugt; und
den digitalen Befehlssignal an jeden der Vielzahl von Slave-Controllern (108) über die zweite Stromleitung überträgt.

6. System (104) nach Anspruch 1, wobei der Master-Controller (106) zu Folgendem konfiguriert ist:
Validieren des empfangenen ersten analogen Befehlssignals;
Erzeugen eines validierten digitalen Befehlssignals, das dem validierten ersten analogen Befehlssignal entspricht; und
nach der Validierung, Übertragen des validierten digitalen Befehlssignals an die Vielzahl von Slave-Controllern (108).

7. System (104) nach Anspruch 1, wobei jeder der Vielzahl von Slave-Controllern (108) zu Folgendem konfiguriert ist:
Empfangen eines analogen Rückkopplungssignals von der zugeordneten streckenseitigen Vorrichtung (110);
Erzeugen des digitalen Rückkopplungssignals auf Grundlage des analogen Rückkopplungssignals; und
Übertragen des digitalen Rückkopplungssignals an den Master-Controller (106), wobei der Master-Controller (106) dazu konfiguriert ist, eine Rückkopplungsaktion auszulösen, um eine oder mehrere Rückkopplungsleitungen auf Grundlage des digitalen Rückkopplungssignals zu steuern.

8. System (104) nach Anspruch 1, wobei jeder der Vielzahl von Slave-Controllern (108) einen ersten Slave-Sub-Controller (502) und einen zweiten Slave-Sub-Controller (504) umfasst, wobei jeder der Vielzahl von Slave-Controllern (108) zu Folgendem konfiguriert ist:
Überwachen des Zustands sowohl des ersten Slave-Sub-Controllers (502) als auch des zweiten Slave-Sub-Controllers (504); und auf Grundlage des Zustands, Veranlassen, dass entweder der erste Slave-Sub-Controller (502) oder der zweite Slave-Sub-Controller (504):
den digitalen Befehlssignals von dem Master-Controller (106) über die zweite Stromleitung empfängt;
den zweiten analogen Befehlssignal auf Grundlage des digitalen Befehlssignals erzeugt; und
den zweiten analogen Befehlssignal über die dritte Stromleitung an die entsprechende streckenseitige Vorrichtung (110) sendet.

## Revendications

1. Système (104) pour l'établissement d'une communication entre un local technique de signalisation (SER, 102) et des dispositifs en bordure de voie (110), le système (104) comprenant :
un dispositif de commande maître (106) configuré pour recevoir un premier signal de commande analogique du local technique de signalisation (SER,102) sur une première ligne électrique, dans lequel le dispositif de commande maître (106) est configuré pour générer un signal de commande numérique sur la base du premier signal de commande analogique ; et
une pluralité de dispositifs de commande esclaves (108) configurés pour recevoir le signal de commande numérique à partir du dispositif de commande maître (106) sur une deuxième ligne électrique, dans lequel chacun de la pluralité de dispositifs de commande esclaves (108) est configuré pour générer un second signal de commande analogique sur la base du signal de commande numérique, dans lequel chacun de la pluralité de dispositifs de commande esclaves (108) est en outre configuré pour envoyer le second signal de commande analogique à un dispositif en bordure de voie (110) correspondant sur une troisième ligne électrique respective, et **caractérisé en ce que** la deuxième ligne électrique comprend un câble électrique à moins de conducteurs que la première et la troisième ligne électrique.

2. Système (104) selon la revendication 1, dans lequel chacune de la première et de la troisième ligne électrique comprend un câble électrique à 24 conducteurs et un câble électrique à 30 conducteurs, et dans lequel la deuxième ligne électrique comprend un câble électrique à 4 conducteurs.

3. Système (104) selon la revendication 1, dans lequel le dispositif de commande maître (106) est positionné à proximité du local technique de signalisation (SER, 102), et dans lequel chacun de la pluralité de dispositifs de commande esclaves (108) est positionné à proximité du dispositif en bordure de voie (110) correspondant.

4. Système (104) selon la revendication 1, dans lequel le dispositif en bordure de voie (110) correspondant comprend un parmi un poteau de signalisation et une machine d'aiguillage.

5. Système (104) selon la revendication 1, dans lequel le dispositif de commande maître (106) comprend un premier sous-dispositif de commande maître (402) et un second sous-dispositif de commande maître (404), dans lequel le dispositif de commande maître (106) est configuré pour :
surveiller un état de chacun parmi le premier sous-dispositif de commande maître (402) et le second sous-dispositif de commande maître (404) ; et
en fonction de l'état surveillé, amener l'un parmi le premier sous-dispositif de commande maître (402) et le second sous-dispositif de commande maître (404) à :
recevoir, à partir du local technique de signalisation (SER, 102), le premier signal de commande analogique à partir du SER (102) sur une première ligne électrique ;
générer le signal de commande numérique sur la base du premier signal de commande analogique ; et
transmettre le signal de commande numérique à chacun de la pluralité de dispositifs de commande esclaves (108) sur la deuxième ligne électrique.

6. Système (104) selon la revendication 1, dans lequel le dispositif de commande maître (106) est configuré pour :
valider le premier signal de commande analogique reçu ;
générer un signal de commande numérique validé correspondant au premier signal de commande analogique validé ; et
après validation, transmettre le signal de commande numérique validé à la pluralité de dispositifs de commande esclaves (108).

7. Système (104) selon la revendication 1, dans lequel chacun de la pluralité de dispositifs de commande esclaves (108) est configuré pour :
recevoir un signal analogique de rétroaction de l'appareil en bordure de voie (110) associé ;
générer le signal de rétroaction numérique sur la base du signal de rétroaction analogique ; et
transmettre le signal de rétroaction numérique au dispositif de commande maître (106), dans lequel le dispositif de commande maître (106) est configuré pour déclencher une action de rétroaction afin de commander une ou plusieurs lignes de rétroaction sur la base du signal de rétroaction numérique.

8. Système (104) selon la revendication 1, dans lequel chacun de la pluralité de dispositifs de commande esclaves (108) comprend un premier sous-dispositif de commande esclave (502) et un second sous-dispositif de commande esclave (504), dans lequel chacun de la pluralité de dispositifs de commande esclaves (108) est configuré pour :
surveiller un état de chacun parmi le premier sous-dispositif de commande esclave (502) et le second sous-dispositif de commande esclave (504) ; et, sur la base de l'état, amener l'un parmi le premier sous-dispositif de commande esclave (502) et le second sous-dispositif de commande esclave (504) à :
recevoir le signal de commande numérique du dispositif de commande maître (106) sur la deuxième ligne électrique ;
générer le second signal de commande analogique sur la base du signal de commande numérique ; et
envoyer le second signal de commande analogique à l'appareil en bordure de voie (110) correspondant sur la troisième ligne électrique.
